# EUROPEAN PATENT APPLICATION

(11) **EP 4 797 004 A1**
(43) Date of publication of application: **26.08.2026**
(21) Application number: 26153385.5
(22) Date of filing: 22.01.2026
(51) Int. Cl.: G03G 15/00, G03G 21/16, H04N 1/00

(54) **IMAGE FORMING APPARATUS, IMAGE FORMING METHOD, AND CARRIER MEANS**

(30) Priority: 19.02.2025 JP 2025024901
(71) Applicant: ETRIA Co., Ltd., Yokohama, Kanagawa 220-0011 (JP)
(72) Inventor: MAEDA, Yuta, Kanagawa, 220-0011 (JP); YANO, Koji, Kanagawa, 220-0011 (JP); SUZUKI, Masahiro, Kanagawa, 220-0011 (JP)
(74) Representative: SSM Sandmair

(57) **Abstract**

An image forming apparatus (1) comprising:
a printer (60) configured to form an image on a sheet;
a scanner (10) configured to scan a document;
a sheet ejection cover (70) configured to open and close a sheet ejection port from which the sheet having the image formed is ejected;
a sheet ejection cover detector (80) configured to detect an open and closed state of the sheet ejection cover (70);
an operation device (20) configured to display an operation executable by the image forming apparatus (1) and receive an operation performed by a user, the operation executable by the image forming apparatus (1) including a copy operation and a scan operation; and
a control unit (100) configured to control the operation device (20) to preferentially display a screen for causing one of the copy operation and the scan operation to be executed in accordance with the detected open and closed state of the sheet ejection cover (70).

## Description

### BACKGROUND

### Technical Field

The present disclosure relates to an image forming apparatus, an image forming method, and carrier means.

### Related Art

To improve usability, there is a copier in an image forming apparatus, which changes a method of controlling the image forming apparatus with reference to the open and closed state of a sheet ejection cover installed at a sheet ejection port from which a sheet having an image formed is ejected.

For example, a copier in an image forming apparatus disclosed in Japanese Unexamined Patent Application Publication No. 10-13585 performs control to switch a sheet ejection operation during copying based on the open and closed state of a sheet ejection cover for the purpose of improving operability and preventing execution of printing not intended by a user.

However, in a case of a multifunction peripheral having both a copy function and a scan function, even though the multifunction peripheral has a function of detecting the open and closed state of a sheet ejection cover as in the configuration described in Japanese Unexamined Patent Application Publication No. 10-13585, a user may select a copy operation or a scan operation. Thus, when an operation error occurs in the selection, an operation not intended by the user may be performed.

### SUMMARY

The present disclosure described herein provides an image forming apparatus including a printer that forms an image on a sheet; a scanner that scans a document; a sheet ejection cover that opens and closes a sheet ejection port from which the sheet having the image formed is ejected; a sheet ejection cover detector that detects an open and closed state of the sheet ejection cover; an operation device that displays an operation executable by the image forming apparatus and receives an operation performed by a user, the operation executable by the image forming apparatus including a copy operation and a scan operation; and a control unit that controls the operation device to preferentially display a screen for causing one of the copy operation and the scan operation to be executed in accordance with the detected open and closed state of the sheet ejection cover.

The present disclosure described herein provides an image forming method performed by an image forming apparatus. The image forming apparatus includes a sheet ejection cover that opens and closes a sheet ejection port from which a sheet having an image formed is ejected. The method includes detecting, by a sheet ejection cover detector, an open and closed state of the sheet ejection cover; and controlling an operation device to preferentially display a screen for executing one of a copy operation and a scan operation included in an operation executable by the image forming apparatus in accordance with the detected open and closed state of the sheet ejection cover.

The present disclosure described herein provides carrier means carrying computer readable code for controlling a computer system to carry out the above-described method.

According to one or more embodiments, an operation error of the user in the image forming apparatus can be reduced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is an external perspective view illustrating an example of an image forming apparatus;
FIG. 2 is a block diagram illustrating an example of a control configuration of the image forming apparatus;
FIG. 3 is a diagram illustrating an example of functions of the image forming apparatus;
FIGS. 4A to 4D are views illustrating examples of display of an operation device;
FIG. 5 is a flowchart presenting an example of a flow of processing performed by the image forming apparatus;
FIG. 6 is a diagram illustrating an example of functions of an image forming apparatus;
FIG. 7 is a flowchart presenting an example of a flow of processing performed by the image forming apparatus;
FIG. 8 is a flowchart presenting an example of a flow of processing performed by the image forming apparatus;
FIG. 9 is a diagram illustrating an example of functions of an image forming apparatus;
FIG. 10 is a flowchart presenting an example of a flow of processing performed by the image forming apparatus;
FIG. 11 is a flowchart presenting an example of a flow of processing performed by an image forming apparatus according to a modification; and
FIG. 12 is a flowchart presenting an example of a flow of processing performed by an image forming apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, an image forming apparatus, an image forming method, and a program according to embodiments of the present disclosure will be described in detail with reference to the accompanying drawings. While the image forming apparatus according to the present embodiment is a multifunction peripheral having a copy function and a scan function, the image forming apparatus can also be applied to an image forming apparatus having a facsimile transmission/reception function or the like as long as the image forming apparatus has at least the copy function and the scan function.

### First Embodiment

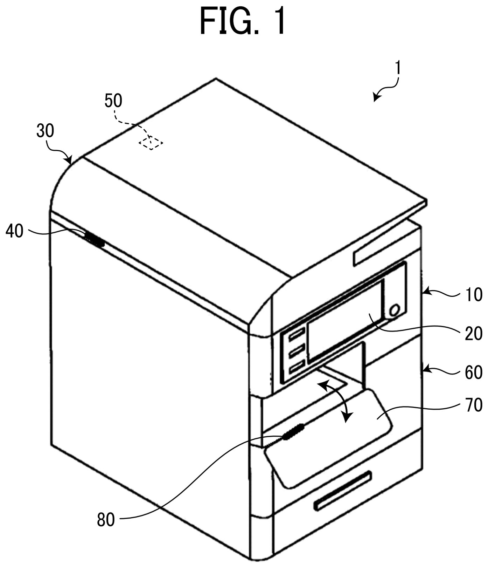

FIG. 1 is an external perspective view illustrating an example of an image forming apparatus 1. As illustrated in FIG. 1, the image forming apparatus 1 includes a scanner 10, an operation device 20, a scanner cover 30, a scanner cover open/close detection sensor 40, a document placement detection sensor 50, a printer 60, a sheet ejection cover 70, and a sheet ejection cover open/close detection sensor 80.

The scanner 10 reads an image of a document or the like and outputs the read image as image data.

The operation device 20 displays an operation executable by the image forming apparatus 1, and receives an operation performed by a user. The operation device 20 is a user interface including a display device that displays the operation executable by the image forming apparatus 1 and an input device that receives an operation performed by the user in combination.

The scanner cover 30 is a cover member of the scanner 10 and is configured to be openable and closable.

The scanner cover open/close detection sensor 40 is an example of a scanner cover detector and is a sensor that detects the open and closed state of the scanner cover 30. In other words, the scanner cover open/close detection sensor 40 detects whether the scanner cover 30 is open or closed.

The document placement detection sensor 50 is an example of a document placement detector and detects that a document to be scanned that is a document to be read by the image forming apparatus 1 has been placed in the image forming apparatus 1.

The printer 60 prints an image on a sheet based on input image data. The print method is not particularly limited, and various methods such as an electrophotographic method, an inkjet method, and a thermal recording method can be used.

The sheet ejection cover 70 is a cover member that opens and closes a sheet ejection port from which the sheet printed by the printer 60 is ejected.

The sheet ejection cover open/close detection sensor 80 is an example of a sheet ejection cover detector and detects the open and closed state of the sheet ejection cover 70. In other words, the sheet ejection cover open/close detection sensor 80 detects whether the sheet ejection cover 70 is open or closed.

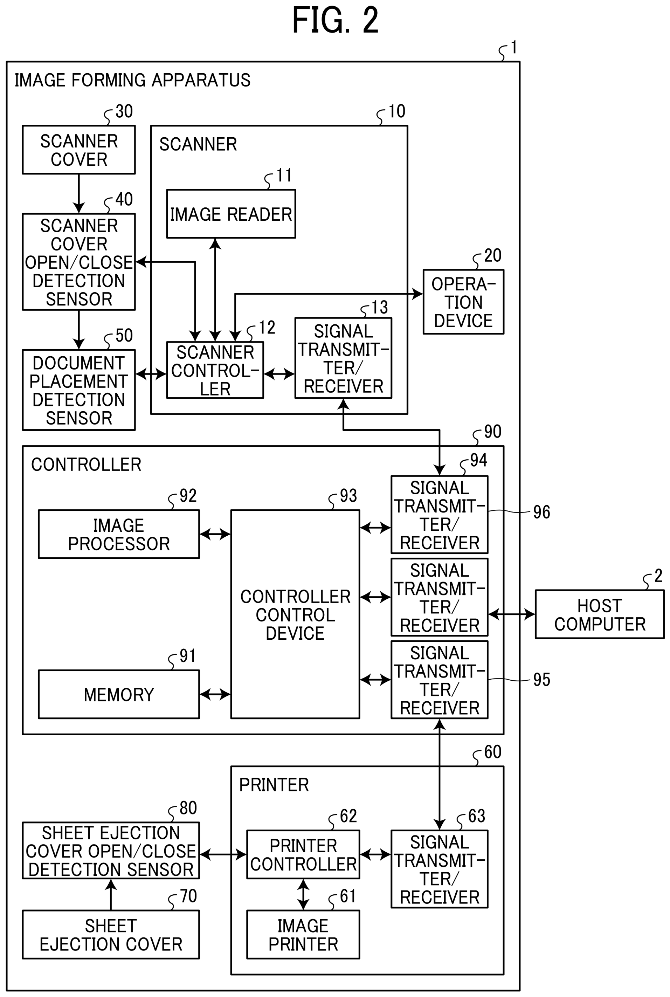

FIG. 2 is a block diagram illustrating an example of a hardware configuration of the image forming apparatus 1.

As illustrated in FIG. 2, the image forming apparatus 1 includes a controller 90 therein in addition to the above-described components. The controller 90 is connected to a host computer 2 that is an external apparatus with a printer driver installed.

The host computer 2 receives an operation performed by the user and transmits image data to the controller 90 in accordance with the received operation performed by the user. The host computer 2 displays operations executable by the image forming apparatus 1, such as a copy operation and a scan operation. When one of the operations is selected by an operation performed by the user, the host computer 2 transmits a command corresponding to the selected operation (a command indicating an instruction to execute the operation) to the controller 90.

A configuration of the scanner 10 will be described next. As illustrated in FIG. 2, the scanner 10 includes an image reader 11, a scanner controller 12, and a signal transmitter/receiver 13.

The image reader 11 is a device that reads an image of a document or the like and outputs image data obtained by reading the image to the scanner controller 12.

The scanner controller 12 controls over the operation of the scanner 10. Specifically, the scanner controller 12 controls the operation device 20, the scanner cover open/close detection sensor 40, the document placement detection sensor 50, the image reader 11, and the signal transmitter/receiver 13. The scanner controller 12 includes, for example, a central processing unit (CPU), a read-only memory (ROM), and a random-access memory (RAM). When the CPU loads a program stored in the ROM or the like into the RAM and executes the program, the scanner controller 12 controls each component of the scanner 10.

The signal transmitter/receiver 13 transmits and receives data and signals to and from the controller 90.

A configuration of the printer 60 will be described next. The printer 60 includes an image printer 61, a printer controller 62, and a signal transmitter/receiver 63.

The image printer 61 performs a print operation of forming an image on a sheet based on input image data. The image printer 61 ejects the sheet after printing from the sheet ejection port.

The printer controller 62 controls over the operation of the printer 60. Specifically, the printer controller 62 controls the image printer 61, the sheet ejection cover open/close detection sensor 80, and the signal transmitter/receiver 63. The printer controller 62 includes, for example, a CPU, a ROM, and a RAM. When the CPU loads a program stored in the ROM or the like into the RAM and executes the program, the printer controller 62 controls each component of the printer 60.

The signal transmitter/receiver 63 transmits and receives data and signals to and from the controller 90.

A configuration of the controller 90 will be described next. The controller 90 controls the operation of the entire image forming apparatus 1. The controller 90 is connected to the scanner 10, the printer 60, and the host computer 2, and transmits and receives signals to and from the devices. The controller 90 can also perform image processing on image data received from the scanner 10 or the host computer 2.

The image processing includes, for example, density correction processing. As illustrated in FIG. 2, the controller 90 includes a memory 91, an image processor 92, a controller control device 93, a signal transmitter/receiver 94, a signal transmitter/receiver 95, and a signal transmitter/receiver 96.

The memory 91 stores content set in accordance with an operation performed by the user and received by the operation device 20. The image processor 92 performs image processing such as density correction on image data transmitted from the scanner 10 via the signal transmitter/receiver 94 or image data received from the host computer 2 via the signal transmitter/receiver 96.

The controller control device 93 controls over the operation of the controller 90. Specifically, the controller control device 93 controls the memory 91, the image processor 92, the signal transmitter/receiver 94, the signal transmitter/receiver 95, and the signal transmitter/receiver 96. The controller control device 93 includes, for example, a CPU, a ROM, and a RAM. When the CPU loads a program stored in the ROM or the like into the RAM and executes the program, the controller control device 93 controls each component of the controller 90. Specifically, based on setting information stored in the memory 91, the controller control device 93 transmits and receives image data to and from the image processor 92, and performs data communication and command communication with the scanner 10, the printer 60, and the host computer 2 via the signal transmitter/receiver 94, the signal transmitter/receiver 95, and the signal transmitter/receiver 96, respectively.

The signal transmitter/receiver 94 transmits and receives data and signals to and from the scanner 10. The signal transmitter/receiver 95 transmits and receives data and signals to and from the printer 60. The signal transmitter/receiver 96 transmits and receives data and signals to and from the host computer 2.

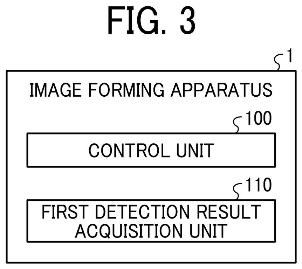

FIG. 3 is a diagram illustrating an example of functions of the image forming apparatus 1. As illustrated in FIG. 3, the image forming apparatus 1 includes a first detection result acquisition unit 110 and a control unit 100. While functions used for the description of a main portion of the present embodiment are illustrated in the example of FIG. 3, the functions of the image forming apparatus 1 are not limited thereto.

The functions of the control unit 100 are implemented by the controller 90. More specifically, the functions of the control unit 100 are implemented when the CPU included in the controller control device 93 of the controller 90 executes a program stored in the ROM or the like. However, without being limited thereto, for example, the functions of the control unit 100 may be implemented by the controller 90 and the scanner 10 in cooperation with each other. That is, the functions of the control unit 100 may be implemented when the CPU included in the controller control device 93 of the controller 90 executes a program stored in the ROM or the like and the CPU included in the scanner controller 12 of the scanner 10 executes a program stored in the ROM or the like. Similarly, for example, the functions of the control unit 100 may be implemented by the controller 90 and the printer 60 in cooperation with each other, or may be implemented by the controller 90, the scanner 10, and the printer 60 in cooperation with each other. Further, for example, some or all of the functions of the control unit 100 may be implemented by a dedicated hardware circuit (a semiconductor integrated circuit or the like).

The first detection result acquisition unit 110 acquires a detection result of the sheet ejection cover open/close detection sensor 80.

The control unit 100 controls the operation device 20 to preferentially display one of the copy function and the scan function in accordance with the open and closed state of the sheet ejection cover 70 detected by the sheet ejection cover open/close detection sensor 80. More specifically, the control unit 100 controls the operation device 20 to preferentially display a copy execution screen for causing the image forming apparatus 1 to execute a copy operation in response to that the sheet ejection cover open/close detection sensor 80 detects that the sheet ejection cover 70 is open, and preferentially display a scan execution screen for causing the image forming apparatus 1 to execute a scan operation in response to that the sheet ejection cover open/close detection sensor 80 detects that the sheet ejection cover 70 is closed. The control unit 100 refers to the detection result acquired by the first detection result acquisition unit 110, and performs the above-described control in accordance with the detection result.

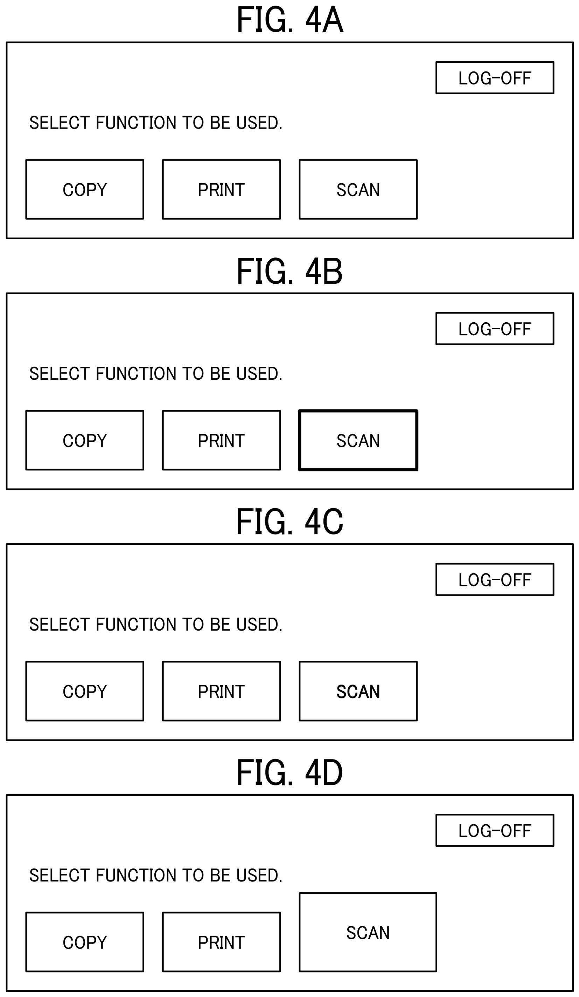

A display method when the control unit 100 performs control to preferentially display one of the copy function and the scan function on the operation device 20 will be described. FIGS. 4A to 4D are views illustrating examples of display of the operation device 20 when the control unit 100 performs the above-described control.

FIG. 4A illustrates an example of a menu screen when the operation device 20 does not preferentially display the copy execution screen or the scan execution screen.

FIG. 4B illustrates an example of the menu screen when the operation device 20 provides display such that a frame for indicating the scan function is thickened as a display method, for example, in the case of preferentially displaying the scan execution screen.

FIG. 4C illustrates an example of the menu screen when the operation device 20 provides display such that a word indicating the scan function is enhanced as a display method, for example, in the case of preferentially displaying the scan execution screen.

FIG. 4D illustrates an example of the menu screen when the operation device 20 provides display such that a frame for indicating the scan function is enlarged as a display method, for example, in the case of preferentially displaying the scan execution screen.

When the control unit 100 controls the operation device 20 to preferentially display one of the copy function and the scan function, the control unit 100 may use one of the above-described display methods or may use a combination of two or more of the above-described display methods. The display method of preferentially displaying one of the copy function and the scan function is not limited to the above-described display methods, and another method (for example, changing the color of the frame for indicating the function) may be used.

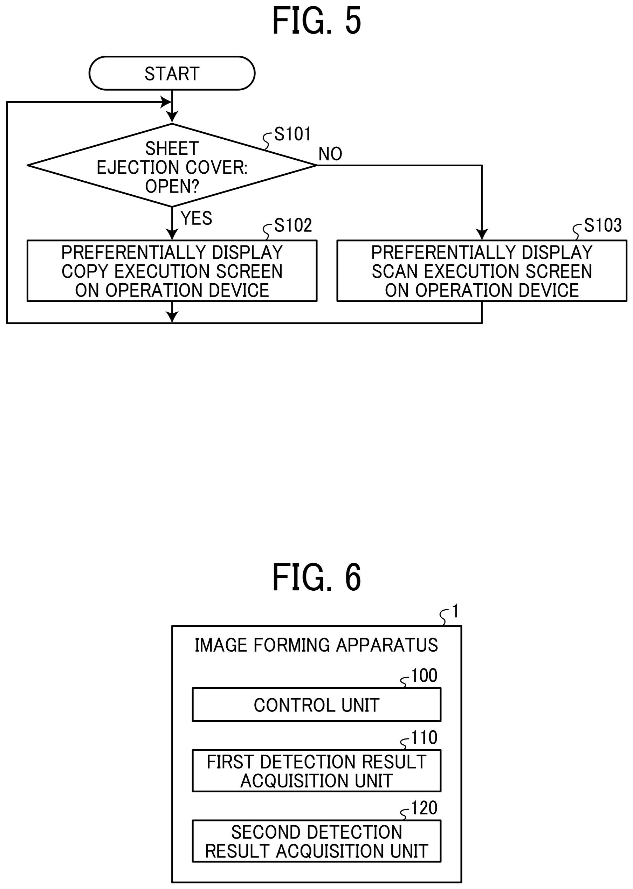

FIG. 5 presents an example of a flowchart presenting an example of an operation of the image forming apparatus 1.

When the power supply of the image forming apparatus 1 is turned on, the first detection result acquisition unit 110 acquires the detection result of the sheet ejection cover open/close detection sensor 80. The control unit 100 refers to the detection result acquired by the first detection result acquisition unit 110, and determines whether the sheet ejection cover 70 is open (step S101). When the sheet ejection cover 70 is open as a result of step S101 (step S101: Yes), the control unit 100 controls the operation device 20 to preferentially display the copy execution screen (step S102). In contrast, when the sheet ejection cover 70 is closed as a result of step S101 (step S101: No), the control unit 100 controls the operation device 20 to preferentially display the scan execution screen (step S103).

After step S102 or step S103, the image forming apparatus 1 repeats the operation in and after step S101 at regular time intervals.

As described above, the image forming apparatus 1 controls the operation device 20 to preferentially display one of the copy function and the scan function in accordance with the open and closed state of the sheet ejection cover 70. More specifically, when the sheet ejection cover 70 is open, the image forming apparatus 1 is in a state in which the copy operation is executable. Thus, the image forming apparatus 1 preferentially displays the copy execution screen to prompt selection of the copy operation which is executable. In contrast, when the sheet ejection cover 70 is closed, the image forming apparatus 1 is in a state in which the copy operation is not executable. Thus, the image forming apparatus 1 controls the operation device 20 to preferentially display the scan execution screen to prompt selection of the scan operation which is executable instead of the copy operation which is not executable. That is, the user can be guided to select the operation executable by the image forming apparatus 1, and as a result, an operation error of the user can be reduced.

### Second Embodiment

A second embodiment will be described next. The redundant description is omitted for the contents common to those of the first embodiment.

FIG. 6 is a diagram illustrating an example of functions of an image forming apparatus 1 according to the second embodiment. As illustrated in FIG. 6, the image forming apparatus 1 includes a first detection result acquisition unit 110, a second detection result acquisition unit 120, and a control unit 100.

The function of the first detection result acquisition unit 110 is as described in the first embodiment, and a detailed description thereof will be omitted. The second detection result acquisition unit 120 acquires a detection result of the document placement detection sensor 50.

In response to that the document placement detection sensor 50 detects that a document to be scanned has been placed, in a state in which an automatic operation execution setting for setting that the image forming apparatus 1 automatically executes the copy operation or the scan operation is enabled, the control unit 100 controls the image forming apparatus 1 to cause the image forming apparatus 1 to execute the copy operation when the sheet ejection cover 70 is open, and cause the image forming apparatus 1 to execute the scan operation when the sheet ejection cover 70 is closed. In a state in which the automatic operation execution setting is disabled, the control unit 100 controls the operation device 20 to preferentially display the copy execution screen when the sheet ejection cover 70 is open, and preferentially display the scan execution screen when the sheet ejection cover 70 is closed. The control unit 100 refers to the detection results acquired by the first detection result acquisition unit 110 and the second detection result acquisition unit 120, and performs the above-described control in accordance with the detection results.

The control unit 100 refers to the detection result acquired by the second detection result acquisition unit 120, and confirms whether a document to be scanned has been placed using the document placement detection sensor 50. When the document placement detection sensor 50 confirms that the document to be scanned has been placed, the control unit 100 confirms whether the automatic operation execution setting is enabled or disabled. When the automatic operation execution setting is enabled and the detection result acquired by the first detection result acquisition unit 110 indicates that the sheet ejection cover 70 is open, the control unit 100 controls the image forming apparatus 1 to cause the image forming apparatus 1 to execute the copy operation. When the automatic operation execution setting is enabled and the detection result acquired by the first detection result acquisition unit 110 indicates that the sheet ejection cover 70 is closed, the control unit 100 controls the image forming apparatus 1 to cause the image forming apparatus 1 to execute the scan operation.

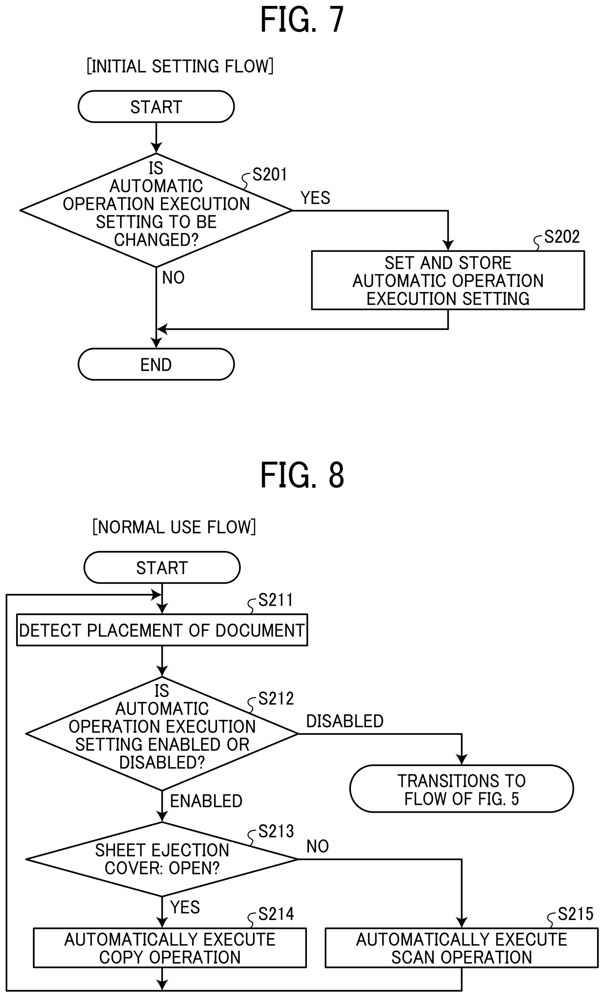

FIG. 7 is a flowchart presenting an example of an operation of the image forming apparatus 1 when the automatic operation execution setting is set in accordance with an operation performed by the user.

As presented in FIG. 7, the control unit 100 confirms whether the operation device 20 has received an operation of changing the automatic operation execution setting (step S201). When the operation device 20 has received the operation of changing the automatic operation execution setting as a result of step S201 (step S201: Yes), the control unit 100 stores the automatic operation execution setting changed in accordance with the received operation in the memory 91 (step S202), and ends the processing. In contrast, when the operation device 20 has not received the operation of changing the automatic operation execution setting as a result of step S201 (step S201: No), the processing ends.

FIG. 8 presents a flowchart presenting an example of an operation of the image forming apparatus 1. First, when the power supply of the image forming apparatus 1 is turned on, the second detection result acquisition unit 120 acquires the detection result of the document placement detection sensor 50 (step S211).

When the control unit 100 confirms the detection result acquired by the second detection result acquisition unit 120 and determines that the document placement detection sensor 50 has detected that a document to be scanned has been placed in the image forming apparatus 1, the control unit 100 refers to the memory 91, and confirms whether the automatic operation execution setting stored in the memory 91 is enabled or disabled (step S212).

When the automatic operation execution setting is enabled as a result of step S212 (step S212: enabled), the control unit 100 refers to the detection result acquired by the first detection result acquisition unit 110, and determines whether the sheet ejection cover 70 is open (step S213). When the sheet ejection cover 70 is open as a result of step S213 (step S213: Yes), the control unit 100 controls the printer 60 to automatically execute the copy operation (step S214). In contrast, when the sheet ejection cover 70 is closed as a result of step S213 (step S213: No), the control unit 100 controls the scanner 10 to automatically execute the scan operation (step S215).

When the automatic operation execution setting is disabled as a result of step S212 (step S212: disabled), the processing transitions to the flow in FIG. 5, and the control unit 100 executes the processing in and after step S101 described above.

With the above-described configuration according to the second embodiment, the image forming apparatus 1 detects the open and closed state of the sheet ejection cover 70 and that the document to be scanned has been placed in the image forming apparatus 1, and automatically executes the operation executable by the image forming apparatus 1 based on the detection results. Thus, the number of operation procedures of the user can be reduced and usability can be improved.

### Third Embodiment

A third embodiment will be described next. The redundant description is omitted for the contents common to those of the first embodiment.

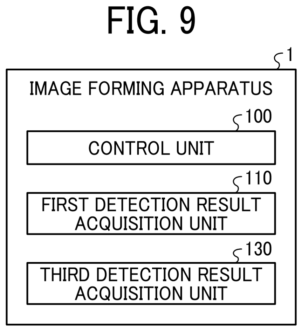

FIG. 9 is a diagram illustrating an example of functions of an image forming apparatus 1 according to the third embodiment. As illustrated in FIG. 9, the image forming apparatus 1 includes a first detection result acquisition unit 110, a third detection result acquisition unit 130, and a control unit 100.

The function of the first detection result acquisition unit 110 is as described in the first embodiment, and a detailed description thereof will be omitted. The third detection result acquisition unit 130 acquires a detection result of the scanner cover open/close detection sensor 40.

The control unit 100 refers to the detection result of the sheet ejection cover open/close detection sensor 80 and the detection result of the scanner cover open/close detection sensor 40, and controls the operation device 20 to preferentially display the copy execution screen on the operation device 20 when the sheet ejection cover 70 is open and the scanner cover 30 is open, preferentially display the scan execution screen on the operation device 20 when the sheet ejection cover 70 is closed and the scanner cover 30 is open, and display a normal menu screen on which the copy execution screen or the scan execution screen is not preferentially displayed when the sheet ejection cover 70 is open or closed and the scanner cover 30 is closed. The control unit 100 refers to the detection results acquired by the first detection result acquisition unit 110 and the third detection result acquisition unit 130, and performs the above-described control in accordance with the detection results.

The control unit 100 refers to the detection results acquired by the first detection result acquisition unit 110 and the third detection result acquisition unit 130, and confirms the open and closed states of the sheet ejection cover 70 and the scanner cover 30. When the detection result acquired by the first detection result acquisition unit 110 indicates that the sheet ejection cover 70 is open and the detection result acquired by the third detection result acquisition unit 130 indicates that the scanner cover 30 is open, the control unit 100 preferentially displays the copy execution screen on the operation device 20.

When the detection result acquired by the first detection result acquisition unit 110 indicates that the sheet ejection cover 70 is closed and the detection result acquired by the third detection result acquisition unit 130 indicates that the scanner cover 30 is open, the control unit 100 preferentially displays the scan execution screen on the operation device 20.

When the detection result acquired by the first detection result acquisition unit 110 indicates that the sheet ejection cover 70 is open or closed and the detection result acquired by the third detection result acquisition unit 130 indicates that the scanner cover 30 is closed, the control unit 100 controls the operation device 20 to display the normal menu screen on which the copy execution screen or the scan execution screen is not preferentially displayed.

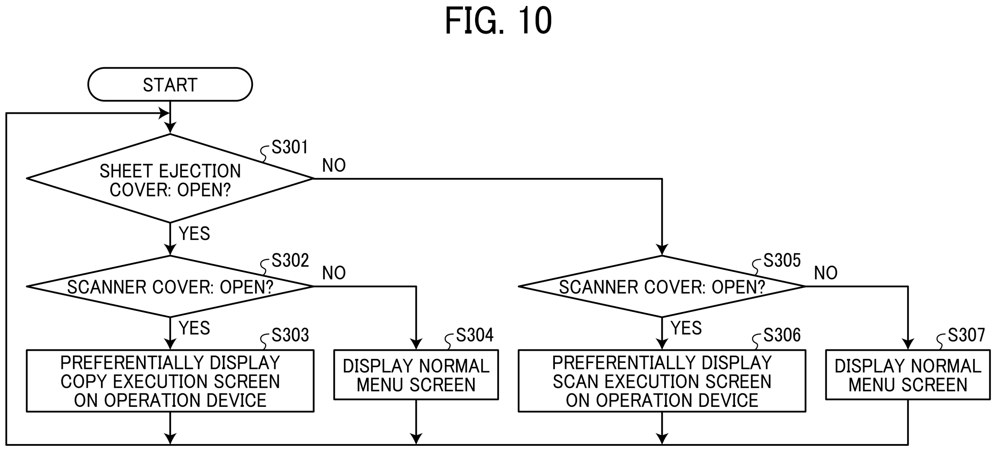

FIG. 10 is an example of a flowchart presenting a procedure of the above-described control performed by the control unit 100.

When the power supply of the image forming apparatus 1 is turned on, the first detection result acquisition unit 110 acquires the detection result of the sheet ejection cover open/close detection sensor 80. The control unit 100 refers to the detection result acquired by the first detection result acquisition unit 110, and determines whether the sheet ejection cover 70 is open (step S301). When the sheet ejection cover 70 is open (step S301: Yes), the third detection result acquisition unit 130 acquires the detection result of the open and closed state of the scanner cover open/close detection sensor 40. The control unit 100 refers to the detection result acquired by the third detection result acquisition unit 130, and determines whether the scanner cover 30 is open (step S302). When the scanner cover 30 is open (step S302: Yes), the control unit 100 controls the operation device 20 to preferentially display the copy execution screen (step S303). When the scanner cover 30 is closed (step S302: No), the control unit 100 controls the operation device 20 to display the normal menu screen (step S304).

In step S301 described above, when the sheet ejection cover 70 is closed (step S301: No), the third detection result acquisition unit 130 acquires the detection result of the scanner cover open/close detection sensor 40. The control unit 100 refers to the detection result acquired by the third detection result acquisition unit 130, and determines whether the scanner cover 30 is open (step S305). When the scanner cover 30 is open (step S305: Yes), the control unit 100 controls the operation device 20 to preferentially display the scan execution screen (step S306). When the scanner cover 30 is closed (step S305: No), the control unit 100 controls the operation device 20 to display the normal menu screen (step S307).

After the control unit 100 controls the operation device 20, the control unit 100 performs control to execute step S301 in which the first detection result acquisition unit 110 acquires the detection result of the sheet ejection cover open/close detection sensor 80 at regular time intervals.

With the above-described image forming apparatus 1 according to the third embodiment, the function executable by the image forming apparatus 1 is determined in consideration of the open and closed state of the sheet ejection cover 70 and the open and closed state of the scanner cover 30. Thus, the function executable by the image forming apparatus 1 can be determined more accurately. Since the operation device 20 is controlled to preferentially display the function determined in such a manner, an operation error of the user can be reduced as in the above-described first embodiment.

### Modification of Third Embodiment

While the image forming apparatus 1 detects the open and closed state of the sheet ejection cover 70 and the open and closed state of the scanner cover 30, and preferentially displays the operation executable by the user to the user based on the open and closed states in the above-described third embodiment, for example, a function of periodically detecting the open and closed state of the scanner cover 30 even at a timing while the image forming apparatus 1 is executing the print operation and displaying the operation executable by the user to the user may be added.

More specifically, the control unit 100 may additionally have a function of controlling the operation device 20 to display a button for executing the copy operation or the scan operation in response to that the scanner cover open/close detection sensor 40 detects that the scanner cover 30 is open while the image forming apparatus 1 is executing the print operation in the case where the sheet ejection cover 70 is open and the scanner cover 30 is closed. In the present modification, the control unit 100 refers to the detection result acquired by the third detection result acquisition unit 130, and performs the above-described control in accordance with the detection result.

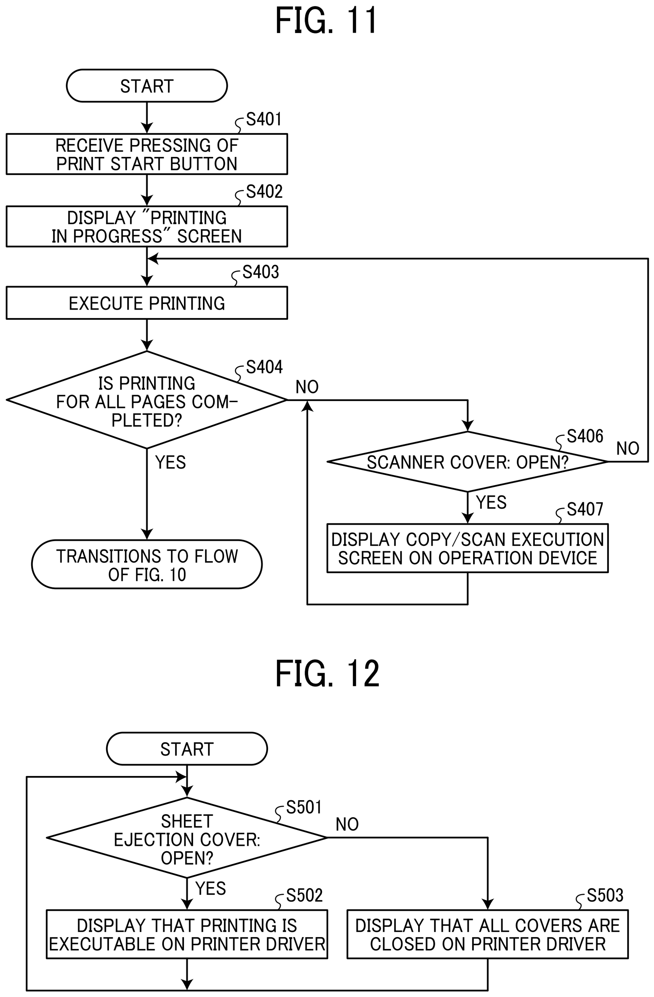

FIG. 11 is an example of a flowchart presenting a procedure in which the control unit 100 performs the above-described control in the image forming apparatus 1 according to the present modification.

When receiving pressing of a print start button on the operation device 20 after the power supply of the image forming apparatus 1 is turned on (step S401), the control unit 100 controls the operation device 20 to display text "printing in progress" (step S402) and controls the printer 60 to execute the print operation (step S403).

Every time printing for one page is completed in the print operation in step S403, the control unit 100 determines whether printing for all pages is completed (step S404). When printing for all pages is completed (step S404: Yes), the control unit 100 transitions to the start state in FIG. 10 (step S405), and executes step S301.

When it is determined in step S404 that printing for all pages is not completed (step S404: No), the third detection result acquisition unit 130 acquires the detection result of the open and closed state of the scanner cover 30. The control unit 100 refers to the detection result acquired by the third detection result acquisition unit 130, and determines whether the scanner cover 30 is open (step S406). When the scanner cover 30 is closed (step S406: No), the printer 60 executes the print operation again. When the scanner cover 30 is open (step S406: Yes), the control unit 100 controls the operation device 20 to display a button for executing the copy operation or the scan operation (step S407).

After the control unit 100 controls the operation device 20, the third detection result acquisition unit 130 executes step S406 of acquiring the detection result of the open and closed state of the scanner cover 30 at regular time intervals.

With the above-described configuration of the present modification, in addition to the advantageous effect similar to that of the above-described third embodiment being obtained, the image forming apparatus 1 can receive an operation performed by the user even at a timing during execution of the print operation, and the usability can be improved.

### Fourth Embodiment

A fourth embodiment will be described next. The redundant description is omitted for the contents common to those of the first embodiment.

An image forming apparatus 1 includes the first detection result acquisition unit 110 and the control unit 100 as in the above-described first embodiment. The function of the first detection result acquisition unit 110 is as described in the first embodiment, and a detailed description thereof will be omitted.

The control unit 100 refers to the detection result of the open and closed state of the sheet ejection cover 70 acquired by the sheet ejection cover open/close detection sensor 80, the control unit 100 causes a printer driver screen of the external apparatus (host computer 2) to display that the image forming apparatus 1 can perform printing when the sheet ejection cover 70 is open, and causes the printer driver screen of the external apparatus (host computer 2) to display that the sheet ejection cover 70 of the image forming apparatus 1 is closed and then controls the image forming apparatus 1 not to perform the print operation when the sheet ejection cover 70 is closed. In the present embodiment, the control unit 100 refers to the detection result acquired by the first detection result acquisition unit 110, and performs the above-described control in accordance with the detection result.

The control unit 100 refers to the detection result acquired by the first detection result acquisition unit 110, and confirms the open and closed state of the sheet ejection cover 70. The control unit 100 causes the printer driver screen of the host computer 2 to display that the image forming apparatus 1 can perform printing when the detection result acquired by the first detection result acquisition unit 110 indicates that the sheet ejection cover 70 is open. The control unit 100 causes the printer driver screen of the host computer 2 to display that the sheet ejection cover 70 of the image forming apparatus 1 is closed and then controls the image forming apparatus 1 not to perform the print operation when the detection result acquired by the first detection result acquisition unit 110 indicates that the sheet ejection cover 70 is closed.

FIG. 12 is an example of a flowchart presenting a procedure of the above-described control performed by the control unit 100.

When the power supply of the image forming apparatus 1 is turned on, the first detection result acquisition unit 110 acquires the detection result of the sheet ejection cover open/close detection sensor 80. The control unit 100 refers to the detection result acquired by the first detection result acquisition unit 110, and determines whether the sheet ejection cover 70 is open (step S501). When the sheet ejection cover 70 is open (step S501: Yes), the control unit 100 causes the printer driver screen of the host computer 2 to display that printing is executable (step S502). When the sheet ejection cover 70 is closed (step S501: No), the control unit 100 causes the printer driver screen of the host computer 2 to display that the covers of the devices are closed and printing is not executable (step S503).

After the control unit 100 causes the printer driver screen of the host computer 2 to display, the first detection result acquisition unit 110 executes step S501 of acquiring the detection result of the sheet ejection cover open/close detection sensor 80 at regular time intervals.

With the above-described fourth embodiment, the image forming apparatus 1 detects the open and closed state of the sheet ejection cover 70, and based on the open and closed state, displays the operation executable by the user on the printer driver screen of the host computer 2. Accordingly, the host computer 2 can also be notified of the operation executable by the user.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The program to be executed by the image forming apparatus 1 (control unit 100) is provided as a file in an installable or executable format recorded on a computer-readable recording medium such as a compact disc-read-only memory (CD-ROM), a flexible disk (FD), a CD-recordable (CD-R), or a digital versatile disk (DVD).

In one example, the program to be executed by the image forming apparatus 1 may be configured to be stored in a computer connected to a network such as the Internet and provided by being downloaded via the network. In another example, the program to be executed by the image forming apparatus 1 according to the embodiments may be provided or distributed via a network such as the Internet.

For example, aspects of the present disclosure include the following.

According to Aspect 1, an image forming apparatus having at least a copy function and a scan function includes a sheet ejection cover that opens and closes a sheet ejection port from which a sheet having an image formed is ejected; a sheet ejection cover detector that detects an open and closed state of the sheet ejection cover; an operation device that displays an operation executable by the image forming apparatus and receives an operation performed by a user; and a control unit that controls the operation device to preferentially display one of the copy function and the scan function in accordance with the open and closed state of the sheet ejection cover detected by the sheet ejection cover detector.

According to Aspect 2, in the image forming apparatus of Aspect 1, the control unit controls the operation device to preferentially display a copy execution screen for causing the image forming apparatus to execute a copy operation in response to that the sheet ejection cover detector detects that the sheet ejection cover is open; and preferentially display a scan execution screen for causing the image forming apparatus to execute a scan operation in response to detection that the sheet ejection cover is closed.

According to Aspect 3, the image forming apparatus of Aspect 2 further includes a document placement detector that detects that a document to be scanned has been placed in the image forming apparatus. In response to that the document placement detector detects that the document to be scanned has been placed, in a state in which an automatic operation execution setting for setting that the image forming apparatus automatically executes the copy operation or the scan operation is enabled, the control unit controls the image forming apparatus to execute the copy operation when the sheet ejection cover is open, and controls the image forming apparatus to execute the scan operation when the sheet ejection cover is closed; and in a state in which the automatic operation execution setting is disabled, controls the operation device to preferentially display the copy execution screen when the sheet ejection cover is open, and preferentially display the scan execution screen when the sheet ejection cover is closed.

According to Aspect 4, the image forming apparatus of Aspect 2 or Aspect 3 further includes a scanner cover that includes a cover member of an image reading device provided in the image forming apparatus and is openable and closable; and a scanner cover detector that detects an open and closed state of the scanner cover. The control unit refers to a detection result of the open and closed state of the sheet ejection cover detected by the sheet ejection cover detector and a detection result of the open and closed state of the scanner cover detected by the scanner cover detector; and controls the operation device to preferentially display the copy execution screen on the operation device when the sheet ejection cover is open and the scanner cover is open; preferentially display the scan execution screen on the operation device when the sheet ejection cover is closed and the scanner cover is open; and display a normal menu screen on which the copy execution screen or the scan execution screen is not preferentially displayed when the sheet ejection cover is open or closed and the scanner cover is closed.

According to Aspect 5, in the image forming apparatus of Aspect 4, while the image forming apparatus is executing a print operation in a case where the sheet ejection cover is open and the scanner cover is closed, the control unit controls the operation device to display a button for executing the copy operation or the scan operation in response to that the scanner cover detector detects that the scanner cover is open.

According to Aspect 6, in the image forming apparatus of any one of Aspect 1 to Aspect 5, the control unit refers to a detection result of the open and closed state of the sheet ejection cover detected by the sheet ejection cover detector; when the sheet ejection cover is open, causes a printer driver screen of an external device to display that the image forming apparatus is printable; and when the sheet ejection cover is closed, causes the printer driver screen of the external device to display that the sheet ejection cover of the image forming apparatus is closed, and controls the image forming apparatus not to perform a print operation.

According to Aspect 7, an image forming method is performed by an image forming apparatus. The image forming apparatus includes a sheet ejection cover that opens and closes a sheet ejection port from which a sheet having an image formed is ejected; a sheet ejection cover detector that detects an open and closed state of the sheet ejection cover; and an operation device that displays an operation executable by the image forming apparatus and receives an operation performed by a user. The image forming apparatus has at least a copy function and a scan function. The method includes controlling the operation device to preferentially display one of the copy function and the scan function in accordance with the open and closed state of the sheet ejection cover detected by the sheet ejection cover detector.

According to Aspect 8, a program that causes an image forming apparatus to execute a method. The image forming apparatus includes a sheet ejection cover that opens and closes a sheet ejection port from which a sheet having an image formed is ejected; a sheet ejection cover detector that detects an open and closed state of the sheet ejection cover; and an operation device that displays an operation executable by the image forming apparatus and receives an operation performed by a user. The image forming apparatus has at least a copy function and a scan function. The method includes controlling the operation device to preferentially display one of the copy function and the scan function in accordance with the open and closed state of the sheet ejection cover detected by the sheet ejection cover detector.

## Claims

1. An image forming apparatus (1) comprising:
a printer (60) configured to form an image on a sheet;
a scanner (10) configured to scan a document;
a sheet ejection cover (70) configured to open and close a sheet ejection port from which the sheet having the image formed is ejected;
a sheet ejection cover detector (80) configured to detect an open and closed state of the sheet ejection cover (70);
an operation device (20) configured to display an operation executable by the image forming apparatus (1) and receive an operation performed by a user, the operation executable by the image forming apparatus (1) including a copy operation and a scan operation; and
a control unit (100) configured to control the operation device (20) to preferentially display a screen for causing one of the copy operation and the scan operation to be executed in accordance with the detected open and closed state of the sheet ejection cover (70).

2. The image forming apparatus (1) according to claim 1, wherein the control unit (100) is configured to control the operation device (20) to:
preferentially display a copy execution screen for causing the copy operation to be executed in response to detection that the sheet ejection cover (70) is open; and
preferentially display a scan execution screen for causing the scan operation to be executed in response to detection that the sheet ejection cover (70) is closed.

3. The image forming apparatus (1) according to claim 2, further comprising a document placement detector (50) configured to detect a document to be scanned in the image forming apparatus (1),
wherein, in response to the document placement detector (50) detecting the document to be scanned, the control unit (100) is configured to:
control, in a state in which an automatic operation execution setting for setting automatic execution of the copy operation or the scan operation is enabled, the printer (60) and the scanner (10) to execute the copy operation when the sheet ejection cover (70) is open, and execute the scan operation when the sheet ejection cover (70) is closed; and
control, in a state in which the automatic operation execution setting is disabled, the operation device (20) to preferentially display the copy execution screen when the sheet ejection cover (70) is open, and preferentially display the scan execution screen when the sheet ejection cover (70) is closed.

4. The image forming apparatus (1) according to claim 2 or 3, further comprising:
a scanner cover (30) provided for the scanner (10) and configured to open and close; and
a scanner cover detector (40) configured to detect an open and closed state of the scanner cover (30),
wherein, based on a detection result of the open and closed state of the sheet ejection cover (70) and a detection result of the open and closed state of the scanner cover (30),
the control unit (100) is configured to control the operation device (20) to:
preferentially display the copy execution screen on the operation device (20) when the sheet ejection cover (70) is open and the scanner cover (30) is open;
preferentially display the scan execution screen on the operation device (20) when the sheet ejection cover (70) is closed and the scanner cover (30) is open; and
display a menu screen when the sheet ejection cover (70) is open or closed and the scanner cover (30) is closed.

5. The image forming apparatus (1) according to claim 4, wherein the control unit (100) is configured to, while the printer (60) is executing a print operation in a case where the sheet ejection cover (70) is open and the scanner cover (30) is closed, control the operation device (20) to display a button for executing the copy operation or the scan operation in response to the scanner cover detector (40) detecting opening of the scanner cover (30).

6. The image forming apparatus (1) according to any one of claims 1 to 5, wherein
based on a detection result of the open and closed state of the sheet ejection cover (70), the control unit (100) is configured to:
cause a printer driver screen of an external device to display that the image forming apparatus (1) is printable, when the sheet ejection cover (70) is open; and
cause the printer driver screen of the external device to display that the sheet ejection cover (70) of the image forming apparatus (1) is closed and control the image forming apparatus (1) not to perform a print operation, when the sheet ejection cover (70) is closed.

7. An image forming method performed by an image forming apparatus (1), the image forming apparatus (1) including a sheet ejection cover (70) configured to open and close a sheet ejection port from which a sheet having an image formed is ejected, the method comprising:
detecting (S101), by a sheet ejection cover detector (80), an open and closed state of the sheet ejection cover (70); and
controlling (S102, S103) an operation device (20) to preferentially display a screen for executing one of a copy operation and a scan operation included in an operation executable by the image forming apparatus (1) in accordance with the detected open and closed state of the sheet ejection cover (70).

8. Carrier means carrying computer readable code for controlling a computer system to carry out the method of claim 7.
